# EUROPÄISCHE PATENTANMELDUNG

(11) **EP 2 037 559 A2**
(43) Veröffentlichungstag der Anmeldung: **18.03.2009**
(21) Anmeldenummer: 08015914.8
(22) Anmeldetag: 10.09.2008
(51) Int. Cl.: H02M 7/44, H01R 13/703, H02H 9/00

(54) **Vorrichtung zur Vermeidung von Lichtbögen an den Steckkontakten beim Trennen eines Wechselrichters von einer Gleichspannungsquelle**

(30) Priorität: 12.09.2007 DE 102007043512
(71) Anmelder: Kostal Industrie Elektrik GmbH, 58513 Lüdenscheid (DE)
(72) Erfinder: Röttger, Dieter, 58730 Fröndenberg (DE)

(57) **Zusammenfassung**

Beschrieben wird eine Energiewandleranlage, die eine Gleichspannungsquelle (1) aufweist, welche über eine Anordnung aus Steckkontakten (7) mit einem Wechselrichter (9) verbunden ist, wobei der Wechselrichter einen Schaltwandler aufweist, und wobei der Wechselrichter einen Halbleiterschalter aufweist, der eine Abschaltvorrichtung (2) ausbildet oder Bestandteil einer Abschaltvorrichtung ist, die in eine Verbindungsleitung zwischen der Gleichspannungsquelle und dem Schaltwandler geschaltet ist, und die beim Trennen der Steckkontakte einen Lichtbogen vermeidet, wobei wenigstens ein Signalgeber (4) vorgesehen ist, der zum Beginn des Trennvorgangs der Steckkontakte oder wenn vorgegebene, für das Trennen der Steckkontakte erforderliche Vorbereitungshandlungen erfolgen, ein elektrisches Ausgangssignal erzeugt, und wobei das Ausgangssignal des wenigstens einen Signalgebers, zur Begrenzung oder Abschaltung des Eingangsstroms, sowohl an der Abschaltvorrichtung als auch an einer Komponente des Schaltwandlers anliegt.

## Beschreibung

Die vorliegende Erfindung betrifft eine Energiewandleranlage, die eine Gleichspannungsquelle aufweist, welche über eine Anordnung aus Steckkontakten mit einem Wechselrichter verbunden ist, wobei der Wechselrichter einen Schaltwandler aufweist, und wobei der Wechselrichter einen Halbleiterschalter aufweist, der eine Abschaltvorrichtung ausbildet oder Bestandteil einer Abschaltvorrichtung ist, die in eine Verbindungsleitung zwischen der Gleichspannungsquelle und dem Schaltwandler geschaltet ist, und die beim Trennen der Steckkontakte einen Lichtbogen vermeidet.

Aus der deutsche Patentschrift DE 102 25 259 B3 ist eine derartige Energiewandleranlage bekannt, bei der ein voreilender Steckkontakt den Hauptstrom führt. Ein nacheilender Steckkontakt übernimmt beim Trennen den Stromfluss; über eine Elektronik wird der Strom heruntergefahren. Eine solche Anlage verlangt eine sehr schnelle Elektronik, die aufwendig ist.

Eine gattungsgemäße Energiewandleranlage ist auch in der deutschen Patentanmeldung DE 10 2005 061 532 A1 beschrieben. Bei dieser Anlage ist ein Schalter mit jeweils einem parallelbetätigten Haupt- und einem Hilfskontakt vorgesehen. Der Hilfskontakt schließt voreilend und öffnet nacheilend zum Hauptkontakt und betätigt einen Halbleiterschalter, der vor dem Verbinden oder vor dem Trennen der Gleichspannungsquelle mit dem Wechselrichter mittels des Hauptkontakts die Verbindung der Gleichspannungsquelle mit dem Wechselrichter zunächst lichtbogenfrei herstellt oder unterbricht. Nachteilig hierbei ist, dass zur Realisierung der Einfehlersicherheit ein zusätzliches Element erforderlich ist. Weiterhin muss mechanisch ein voreilender Kontakt realisiert werden, der aufwendig ist.

Ein bevorzugtes Anwendungsgebiet solcher Energiewandler ist die Photovoltaik. In der Photovoltaik wird ein Wechselrichter dazu verwendet, die mit einem Photovoltaikgenerator erzeugte Gleichspannung in eine Wechselspannung umzuwandeln und diese in das Netz des lokalen Energieversorgers einzuspeisen. Ein Photovoltaikgenerator besteht üblicherweise aus mehreren Solarzellenmodulen, die miteinander in Reihe zu mehreren sogenannten Strings verschaltet sind. Die Strings liefern eine Gleichspannung, die nach einer Anpassung der Spannungshöhe durch einen Schaltwandler mittels einer Brückenschaltung in eine Wechselspannung umgesetzt wird. Im folgenden wird das gesamte, dem Photovoltaikgenerator nachgeschaltete Gerät kurz als Wechselrichter bezeichnet.

Photovoltaikgeneratoren führen teilweise sehr hohe Spannungen, die in der Größenordnung von 1000 V liegen können. Bei Berührung von spannungsführenden Teilen besteht daher eine unmittelbare Gefahr für Personen, die z. B. Wartungsarbeiten an der Anlage vornehmen. Aus diesem Grunde schreibt die Norm VDE 0100 Teil 712 in ihrer neuesten Fassung eine Gleichspannungs-Trennstelle vor.

Diese Gleichspannungs-Trennstelle erfüllt die Aufgabe des Freischaltens und wird zumeist durch einen mechanischen Schalter realisiert. Das Freischalten besteht prinzipiell aus zwei Abläufen, nämliche erstens einem Unterbinden des Stromflusses und zweitens einem Trennen der elektrischen Verbindung.

Ein Trennen von Gleichspannungen bei höheren Strömen ist mit einfachen Schaltern, wie sie üblicherweise zum wechselspannungsseitigen Trennen verwendet werden, problematisch. Bei Gleichspannungen stellt sich aufgrund des fehlenden Nulldurchganges ein länger andauernder Lichtbogen ein, der die Steckkontakte zerstören kann oder eine heftige Kontaktalterung bewirkt. Daher werden hochlastfähige und damit großbauende und sehr teure Schaltglieder benötigt.

Bereits aufgrund der relativ hohen Kosten ist es sinnvoll, sich nach einer anderen als der mechanischen Lösung umzusehen, mit der das Schutzziel Freischalten erreicht werden kann. Des weiteren ist die Forderung nach einer sogenannten "Einfehlersicherheit" zu erfüllen. Dies bedeutet, dass es beim Auftreten eines beliebigen Fehlers zu keiner Gefährdung von Personen oder Sachen kommen darf.

Es stellte sich daher die Aufgabe, eine Energiewandleranlage mit einer Freischaltstelle zu realisieren, die kostengünstig ist, klein baut und damit in den Wechselrichter integriert werden kann, die die Schutzziele der Gleichspannungs-Trennstelle nach VDE 0100 Teil 712 sicherstellt und die die Nachteile konventioneller mechanischer Trennschalter vermeidet.

Diese Aufgabe wird erfindungsgemäß dadurch gelöst, dass wenigstens ein Signalgeber vorgesehen ist, der zum Beginn des Trennvorgangs der Steckkontakte oder wenn vorgegebene, für das Trennen der Steckkontakte erforderliche Vorbereitungshandlungen erfolgen, ein elektrisches Ausgangssignal erzeugt, und dass das Ausgangssignal des wenigstens einen Signalgebers, zur Begrenzung oder Abschaltung des Eingangsstroms, sowohl an der Abschaltvorrichtung als auch an einer Komponente des Schaltwandlers anliegt.

Die erfindungsgemäße Energiewandleranlage zeichnet sich besonders durch einen verringerten Kostenaufwand aus. Sie kann mit einfachen Standard-Komponenten realisiert werden. Kostspielige, robuste, großbauende Schalter oder Steckkontakte sind nicht erforderlich. Einer Funkenbildung an den Steckkontakten wird sicher vorgebeugt. Eine Gefährdung des Anwenders wird sicher vermieden. Es sind die vom Hersteller der Steckkontakte definierten Steckzyklen möglich, somit ist eine sehr lange Lebensdauer gewährleistet. Ein Kontrollieren der Steckkontakte auf Abbrand durch den Anwender ist nicht erforderlich.

Es ist eine Abschaltvorrichtung vorhanden, die in eine Verbindungsleitung zwischen der Gleichspannungsquelle und den Schaltwandler geschaltet ist. Dabei wird das Ausgangssignal des Signalgebers sowohl dazu genutzt, um den Wechselrichter auszuschalten als auch dazu, die Abschaltvorrichtung zu betätigen. Dabei ist jede einzelne der beiden Maßnahmen dazu geeignet, den Stromfluss zu unterbinden. Dadurch ist ein gefahrloses, stromloses Trennen durch Öffnen der Steckkontakte gewährleistet.

Die Einfehlersicherheit wird dadurch erreicht, dass der Signalgeber sowohl auf die Abschaltvorrichtung als auch auf den Schaltwandler einwirkt, so dass zwei Instanzen unabhängig voneinander den Stromfluss von der Gleichspannungsquelle zum Schaltwandler unterbrechen oder wenigstens vermindern können. Selbst wenn eine dieser Instanzen einen Fehler aufweisen sollte, welcher eine Verminderung des Stromflusses verhindert, etwa durch einen inneren Schluss des Halbleiterschalters, so ist eine sichere Abschaltung durch die jeweils andere Instanz dennoch gewährleistet. Durch die Stromabschaltung wird eine gefährliche Lichtbogenbildung beim Trennen der Steckkontakte verhindert.

Vorteilhafterweise erstreckt sich die Anforderung einer Einfehlersicherheit auch auf den Signalgeber. Dieser kann z. B. doppelt als Schaltkontakt oder als Lichtschranke ausgeführt werden. Auch eine Schaltbrücke, die geöffnet eine doppelte Trennung aufweist, ist geeignet. Besonders vorteilhaft ist, wenn die Energiewandleranlage die verschiedenen Komponenten des Signalgebers durch eine Plausibilitätsprüfung der Ausgangssignale überwacht.

Weitere vorteilhafte Ausgestaltungen und Weiterbildungen einer erfindungsgemäßen Energiewandleranlage sind in den abhängigen Ansprüchen aufgeführt. Im folgenden wird die Erfindung anhand von zwei schematischen Schaltbildern dargestellt und näher erläutert. Es zeigen
- Figur 1: ein Prinzipschaltbild einer erfindungsgemäßen Energiewandleranlage,
- Figur 2: ein vorteilhafte Ausführungsbeispiel einer Abschaltvorrichtung,
- Figur 3: eine Ausführungsvariante der in der Figur 1 dargestellten Energiewandleranlage.

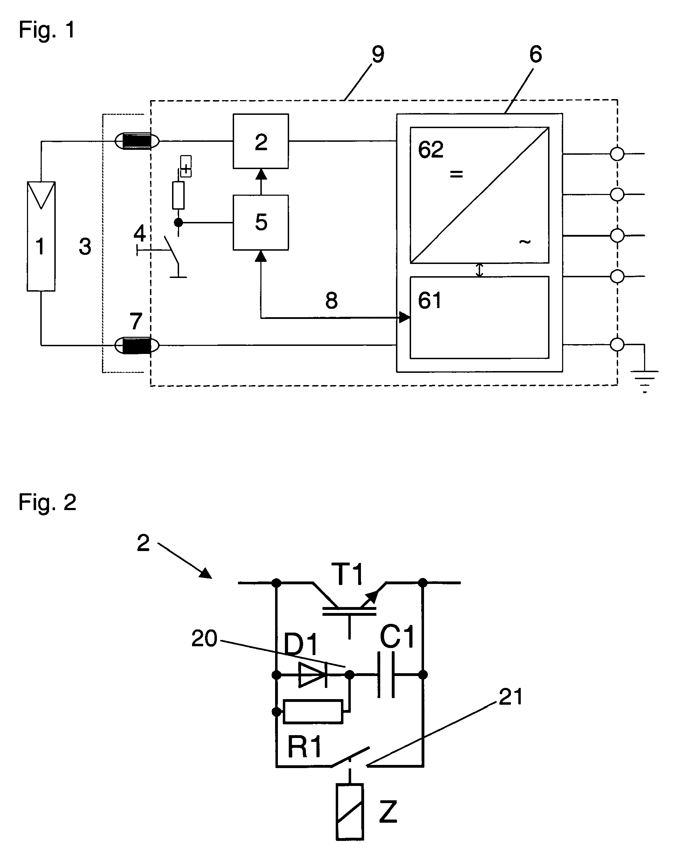

Die nachfolgende Erläuterung bezieht sich auf den Aufbau einer Photovoltaikanlage als ein spezielles Beispiel einer Energiewandleranlage. Die Figur 1 zeigt die Anbindung eines Photovoltaikgenerators 1 an einen Wechselrichter 9 sowie die erfindungsgemäß realisierte Trennstelle. Der hier als einzelnes Bauteil skizzierte Photovoltaikgenerator 1 kann aus einer Vielzahl, zu sogenannten Strings geschalteten Solarmodulen bestehen, die zusammen eine hohe Gleichspannung erzeugen.

Der Photovoltaikgenerator 1 ist über eine Anordnung aus zwei Steckkontakten 7 mit einem Steuergerät verbunden, welches hier durch einen gestrichelten Rahmen gekennzeichnet und kurz als Wechselrichter 9 bezeichnet ist. Der Wechselrichter 9 weist eine Abschaltvorrichtung 2 auf. Der Abschaltvorrichtung 2 nachgeschaltet ist ein Schaltwandler 6, welcher die im Photovoltaikgenerator 1 erzeugte Energie in eine Netzwechselspannung umwandelt.

Der Schaltwandler 6 besteht aus einer Schaltwandler-Steuerung 61 und dem eigentlichen Leistungswandler 62. Ist der Wechselrichter 9 in Betrieb, wird der Leistungswandler 62 von der Schaltwandler-Steuerung 61 angesteuert, so dass er Energie aus dem Photovoltaikgenerator 1 entnimmt und ins Netz einspeist. Ist der Leistungswandler 62 außer Betrieb, wird keine Energie aus dem Photovoltaikgenerator 1 entnommen und es fließt kein Strom.

Die Schaltwandler-Steuerung 61 dient auch zur Erfassung des Ausgangssignals eines Signalgebers 4. Dabei wird das Signal des Signalgebers 4 durch die Verknüpfungselektronik 5 aufbereitet und über eine Schnittstelle 8 an die Schaltwandler-Steuerung 61 weitergegeben. Soll nun der Eingang des Wechselrichters 9 freigeschaltet werden, muss zunächst eine vorbereitende Maßnahme durchgeführt werden, z. B. das Entfernen einer Abdeckung 3 über den Steckverbindern 7. Mit der Abdeckung 3 gekoppelt ist der Signalgeber 4, der beim Entfernen der Abdeckung ein Signal generiert, welches über die Verknüpfungselektronik 5 an die Abschaltvorrichtung 2 sowie zusätzlich an die Schaltwandler-Steuerung 61 gelangt.

Die Abschaltvorrichtung 2 unterbricht daraufhin die elektrische Verbindung zwischen dem Photovoltaikgenerator 1 und dem Schaltwandler 6. Zugleich wird über die Schnittstelle 8 der Leistungswandler 62 abgeschaltet. Durch diese redundant wirkenden Sicherungsmaßnahmen wird der Stromfluss sicher unterbunden. Danach kann die Steckverbindung 7 zwischen dem Photovoltaikgenerator und dem Wechselrichter 9 gefahrlos und, da kein Lichtbogen auftreten kann, materialschonend getrennt werden.

Die Schnittstelle 8 kann dabei sowohl von der Verknüpfungselektronik 5 als auch von der Schaltwandler-Steuerung 61 auf Plausibilität überprüft werden. Tritt ein Fehler an der Schnittstelle 8 auf, führt dieser zu Abschaltung des Schaltwandlers 6 durch die Schaltwandler-Steuerung 61 sowie ebenfalls zur Auslösung der Abschaltvorrichtung 2 durch die Verknüpfungselektronik 5.

Vorteilhaft ist zudem, wenn die Verknüpfungselektronik 5 die Funktion der Instanzen überprüft. Dieses wird z. B. dadurch erreicht, dass die Verknüpfungselektronik 5 mit einem kleinen Mikrocontroller ausgestattet ist, der über die Schnittstelle 8 Werte des Wechselrichters, z.B. Eingangsstrom und Eingangsspannung, abfragt und auf Plausibilität überprüft. Dadurch kann bei einem Fehler ein erneutes Wiedereinschalten verhindert werden.

Ein Ausführungsbeispiel für die Abschaltvorrichtung 2 zeigt Figur 2. Diese besteht aus einem Halbleiterschalter T1, der das eigentliche Ein- und Abschalten der elektrische Verbindung zwischen dem Photovoltaikgenerator 1 und dem Schaltwandler 6 übernimmt. Zur Löschung von induktiven Spannungsspitzen ist ein Funkenlöschkreis 20 vorgesehen, bestehend aus einem Kondensator C1, einer Diode D1 und einem Widerstand R1. Die Diode D1 sorgt dafür, dass bei Öffnen des Halbleiterschalters T1 der Kondensators C1 niederohmig angebunden ist und wirkungsvoll Überspannungsspitzen abfängt. Beim Zuschalten des Halbleiterschalters T1 bewirkt der Widerstand R1 eine langsamere Entladung des Kondensators C1. Da die Entladung über den Halbleiterschalter T1 erfolgt, sorgt der Widerstand R1 somit dafür, dass der Halbleiterschalter T1 nur gering belastet wird.

Die Relaiskontakte 21 haben die Aufgabe, nach der Einschaltung und vor der Abschaltung - also im Normalbetrieb - den Halbleiterschalter T1 zu überbrücken und so die Verluste in der Schaltung zu minimieren. Dadurch schaltet das Relais Z maximal die am Halbleiterschalter T1 anliegende Spannung, die in der Regel etwa 2-3V beträgt. Die Anforderung an das Relais Z besteht lediglich darin, dass dessen geöffnete Relaiskontakte 21 der Spannung des Photovoltaikgenerators 1 standhalten müssen. Diese Anforderung ist relativ leicht zu erfüllen, so dass ein kleines, kompaktes und kostengünstiges Relais Z eingesetzt werden kann.

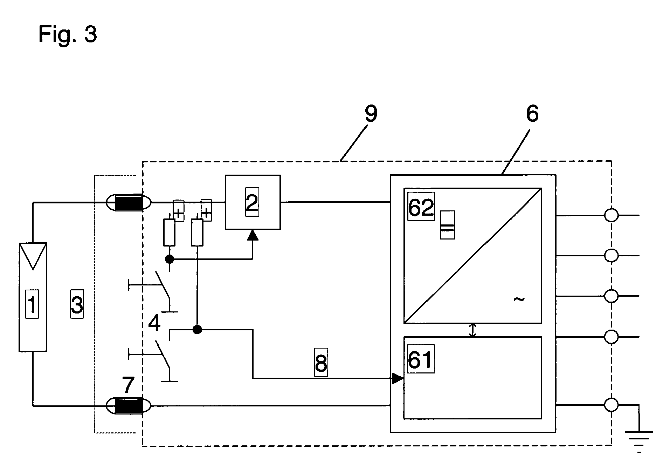

Vorteilhafterweise kann vorgesehen sein, den Signalgeber 4 selbst redundant auszuführen, indem er mehrere, voneinander unabhängig funktionierende sensierende Elemente aufweist. Dies ist in der in der Figur 3 dargestellten Ausführungsvariante des Energiewandlers realisiert.

In diesem Falle sind zwei unabhängig funktionierende Signalgeber 4 vorhanden, wobei ein Signalgeber auf die Abschaltvorrichtung 2 wirkt und der andere auf Schaltwandler-Steuerung 61. Selbst bei einem Fehler eines Signalgebers ist damit immer sichergestellt, dass das System sicher ausschaltet. Vorteilhafterweise kann hier die in der Figur 1 dargestellte Verknüpfungselektronik 5 eingespart werden.

Wichtig beim Trennen der Steckkontakte 7 ist, dass immer zuerst der Stromfluss unterbunden wird. Daher ist auf geeignete Weise sicherzustellen dass die Steckkontakte 7 erst geöffnet werden können, wenn der Stromfluss unterbunden wurde. Dies wird hier beispielhaft dadurch erreicht, dass eine Abdeckvorrichtung 3, etwa in Form einer Haube vorgesehen ist, die die Steckkontakte 7 abdeckt. Ein Betrieb des Wechselrichters 9 ist nur mit aufgesetzter Haube 3 möglich. Wird diese entfernt, wird über den Signalgeber 4, der als Schaltkontakt, Gabellichtschranke oder ein anderes geeignetes sensierendes Element ausgebildet sein kann, dieses an die Elektronik des Wechselrichters 9 gemeldet. Diese fährt vor dem Trennen der Steckkontakte 7 den Stromfluss sicher herunter.

### Bezugszeichen

- 1: Gleichspannungsquelle (Photovoltaikgenerator)
- 2: Abschaltvorrichtung (zweite Instanz)
- 3: Abdeckvorrichtung (Haube)
- 4: Signalgeber
- 5: Verknüpfungselektronik
- 6: Schaltwandler
- 61: Schaltwandler-Steuerung
- 62: Leistungswandler
- 7: Steckkontakte
- 8: Schnittstelle
- 9: Wechselrichter
- 20: Funkenlöschkreis
- 21: Relaiskontakte

- C1: Kondensator
- D1: Diode
- R1: Widerstand
- Z: Relais
- T1: Halbleiterschalter

## Patentansprüche

1. Energiewandleranlage,
die eine Gleichspannungsquelle aufweist, welche über eine Anordnung aus Steckkontakten mit einem Wechselrichter verbunden ist,
wobei der Wechselrichter einen Schaltwandler aufweist,
und wobei der Wechselrichter einen Halbleiterschalter aufweist, der eine Abschaltvorrichtung ausbildet oder Bestandteil einer Abschaltvorrichtung ist, die in eine Verbindungsleitung zwischen der Gleichspannungsquelle und dem Schaltwandler geschaltet ist, und die beim Trennen der Steckkontakte einen Lichtbogen vermeidet,
**dadurch gekennzeichnet,**
**dass** wenigstens ein Signalgeber (4) vorgesehen ist, der zum Beginn des Trennvorgangs der Steckkontakte (7) oder wenn vorgegebene, für das Trennen der Steckkontakte (7) erforderliche Vorbereitungshandlungen erfolgen, ein elektrisches Ausgangssignal erzeugt,
und **dass** das Ausgangssignal des wenigstens einen Signalgebers (4), zur Begrenzung oder Abschaltung des Eingangsstroms, sowohl an der Abschaltvorrichtung (2) als auch an einer Komponente (61) des Schaltwandlers (6) anliegt.

2. Energiewandleranlage nach Anspruch 1, **dadurch gekennzeichnet, dass** der Signalgeber (4) durch einen Signalkontakt an den Steckkontakten (7) ausgebildet ist.

3. Energiewandleranlage nach Anspruch 2, **dadurch gekennzeichnet, dass** der Signalkontakt beim Verbinden der Steckkontakte (7) gegenüber den anderen Steckkontakten nacheilend geschlossen wird und beim Trennen der Steckkontakte (7) vorauseilend geöffnet wird.

4. Energiewandleranlage nach Anspruch 1, **dadurch gekennzeichnet, dass** der Signalgeber (4) durch eine Kontaktanordnung gebildet ist, die durch das Entfernen einer Abdeckvorrichtung (3) betätigbar ist.

5. Energiewandleranlage nach Anspruch 1 oder 4, **dadurch gekennzeichnet, dass** der Signalgeber (4) als eine Gabellichtschranke ausgebildet ist.

6. Energiewandleranlage nach Anspruch 1, **dadurch gekennzeichnet, dass** der elektrische Halbleiterschalter (T1) durch einen Relaiskontakt (21) überbrückbar ist.

7. Energiewandleranlage nach Anspruch 1, **dadurch gekennzeichnet, dass** dem elektrischen Halbleiterschalter (T1) ein Funkenlöschkreis (20) parallelgeschaltet ist.

8. Energiewandleranlage nach Anspruch 7, **dadurch gekennzeichnet, dass** der Funkenlöschkreis (20) eine Reihenschaltung aus einer Diode (D1) und einem Kondensator (C1) aufweist.

9. Energiewandleranlage nach Anspruch 8, **dadurch gekennzeichnet, dass** der Diode (D1) ein Widerstand (R1) parallelgeschaltet ist.

10. Energiewandleranlage nach Anspruch 1, **dadurch gekennzeichnet, dass** das Ausgangssignal des Signalgebers (4) als ein Eingangssignal an einer Verknüpfungselektronik (5) anliegt, welche ein Ansteuersignal sowohl an die Abschaltvorrichtung (2) als auch den Schaltwandler (6) geben kann.

11. Energiewandleranlage nach Anspruch 10, **dadurch gekennzeichnet, dass** die Verknüpfungselektronik (5) zumindest ein weiteres Eingangssignal erhält, welches das an die Abschaltvorrichtung (2) und an den Schaltwandler (6) gegebene Ansteuersignal beeinflusst.

12. Energiewandleranlage nach Anspruch 11, **dadurch gekennzeichnet, dass** das weitere Eingangssignal der Verknüpfungselektronik (5) das Ausgangssignal eines Stromsensors des Schaltwandlers (6) ist.

13. Energiewandleranlage nach Anspruch 1, **dadurch gekennzeichnet, dass** die Energiewandleranlage eine Photovoltaikanlage und die Gleichspannungsquelle (1) ein Photovoltaikgenerator ist.
